(19)

Europäisches
Patentamt

European
Patent Office

Office européen
des brevets

(11) **EP 4 596 920 A1**

(12) **EUROPEAN PATENT APPLICATION**

(43) Date of publication:
**06.08.2025 Bulletin 2025/32**

(21) Application number: **24155458.3**

(22) Date of filing: **02.02.2024**

(51) International Patent Classification (IPC):
**F16H 25/02** (2006.01)  **F15B 15/06** (2006.01)
**F16H 25/14** (2006.01)  **F16H 27/02** (2006.01)
**F16H 31/00** (2006.01)

(52) Cooperative Patent Classification (CPC):
**F16H 27/02; F15B 11/127; F15B 15/06;
F16H 31/005**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **UNIVERSITEIT TWENTE
7522 NB Enschede (NL)**

(72) Inventor: **Groenhuis, Vincent
7522 NB Enschede (NL)**

(74) Representative: **'t Jong, Bastiaan Jacob
Inaday
Piet Heinstraat 12
7511 JE Enschede (NL)**

(54) **A STEP MOTOR**

(57) The present invention relates to a step motor having (a) a motor housing; (b) a geared wheel comprising gear elements disposed around the circumference, the geared wheel being disposed in the motor housing and rotatable around a first axis; (c) a hoop element comprising inward oriented gear elements, said hoop element being disposed within the motor housing and around the geared wheel and being displaceable in an actuation plane perpendicular to the first axis and wherein the inward oriented gear elements are arranged for cooperating with gear elements of the geared wheel by intermeshing, and (d) at least two linear actuators evenly spaced around the first axis and configured for displacing the hoop element in the actuation plane for rotating the geared wheel, each linear actuator providing linear motion along a respective actuation line.

Fig. 1

EP 4 596 920 A1

**Description**

FIELD OF THE INVENTION

The present invention relates to a step motor. More particularly embodiments of the present inventions relate to a step motor with reduced wear under high-torque applications. Furthermore, embodiments of the present invention relate to a step motor that can be used in magnetic resonance imaging (MRI) environments, environments with explosion risks, highvoltage environments or like environments where devices with magnetic or electrically conducting parts may pose a risk.

BACKGROUND

Rotational and linear stepper motors are widely used for actuation of mechanical devices. Some applications mentioned in the preamble require a stepper motor that does neither contain magnetic parts nor electrically conducting parts. One such motor is for example known from US2020/182267.

A drawback of the known step motor design is that the wedge mechanism employed therein for converting linear motion in a rotational motion stresses the gear teeth to an extent that the motor fails after prolonged time or under high pressure.

It is therefore an object of the present invention to reduce or even obviate the above-mentioned drawbacks, and further provides other related advantages.

SUMMARY

Briefly stated, the present invention provides step motors and related assemblies which exhibit enhanced stability after prolonged usage and/or under higher pressure. Within one embodiment step motors are provided comprising: (a) a motor housing; (b) a geared wheel comprising gear elements disposed around the circumference, the geared wheel being disposed in the motor housing and rotatable around a first axis; (c) a hoop element comprising inward oriented gear elements, said hoop element being disposed within the motor housing and around the geared wheel and being displaceable in an actuation plane perpendicular to the first axis and wherein the inward oriented gear elements are arranged for cooperating with the outward oriented gear elements of the geared wheel by intermeshing; and (d) at least two linear actuators evenly spaced around the first axis and configured for displacing the hoop element in the actuation plane for rotating the geared wheel, each linear actuator providing linear motion along a respective actuation line.

The details of one or more embodiments are set forth in the description below. The features illustrated or described in connection with one exemplary embodiment may be combined with the features of other embodiments. Thus, any of the various embodiments described herein can be combined to provide further embodiments. Aspects of the embodiments can be modified, if necessary to employ concepts of the various patents, applications and publications as identified herein to provide yet further embodiments. Other features, objects and advantages will be apparent from the description, the drawings, and the claims.

BRIEF DESCRIPTION OF THE DRAWINGS

Features of the present disclosure, its nature and various advantages will be apparent from the accompanying drawings and the following detailed description of various embodiments.

FIG 1 shows an exploded view of an embodiment of a step motor according to the invention.
FIG 2 shows a top view of the assembled step motor according to FIG 1.
FIG 3 shows a sectional view of the assembled step motor of FIG 2 along line III-III as shown in FIG 2.
FIGs 4A, 4B, 4C, and 4D show a sectional view of the assembled step motor of FIGs 2 and 3 along line IV-IV as shown in FIG 3 in consecutive operational steps.

Corresponding reference numerals indicate corresponding parts throughout the drawings.

DETAILED DESCRIPTION OF THE INVENTION

The present invention may be understood more readily by reference to the following detailed description of the preferred embodiments of the invention and the Examples included herein. It is to be understood that the terminology used herein is for the purpose of describing specific embodiments only and is not intended to be limiting. It is further to be understood that unless specifically defined herein, the terminology used herein is to be given its traditional meaning as known in the relevant art.

Briefly, as noted above, the present invention provides step motors and related assemblies which exhibit enhanced stability after prolonged usage and/or under higher pressure. Within one embodiment of the invention step motors are provided comprising: (a) a motor housing; (b) a geared wheel comprising gear elements disposed around the circumference, the geared wheel being disposed in the motor housing and rotatable around a first axis; (c) a hoop element comprising inward oriented gear elements, said hoop element being disposed within the motor housing and around the geared wheel and being displaceable in an actuation plane perpendicular to the first axis and wherein the inward oriented gear elements are arranged for cooperating with the outward oriented gear elements of the geared wheel by intermeshing; and (d) at least two linear actuators evenly spaced around the first axis and configured for displacing the hoop element in the actuation plane for rotating the geared wheel, each linear actuator providing linear motion along a respective actuation line.

In order to further an understanding of the various embodiments herein, the following sections are provided: A. Step Motors - Generally and B. Step Motors - Specific Embodiments.

A. Step Motors - Generally

According to one embodiment of the invention step motors are provided which have a geared wheel with gear elements evenly distributed around the circumference. The geared wheel is mounted within the housing and constrained therein to be rotatable around a first axis. The geared wheel is thus not an eccentric because there is no radial motion. Disposed around the geared wheel is a hoop element having inward oriented gear elements which intermesh with the gear elements of the geared wheel. The hoop element is displaceable in an actuation plane which lies perpendicular to the first axis. The hoop element is displaced within the actuation plane by at least two linear actuators evenly spaced around the first axis, so that overlap between strokes of the linear actuators is minimized. The linear actuators can provide linear motion along an actuation line. The actuation line of a linear actuator is thus at least parallel to the direction of linear motion and is preferably consistently defined with respect to the geometry of a linear actuator or a linearly displaced body thereof, such as the line running through the center of the cross-sectional area of a cylinder or a piston of a fluid operated linear actuator. The linear actuators can be disposed such that the respective actuation lines intersect at the first axis, or at equal distances thereof.

The hoop element can be displaced along each of the actuation lines for a specific stroke distance, whereby the stroke distance is at least equal to the depth of intermeshing of the gear elements. This enables the hoop element to be fully intermeshed or engaged at a first side and fully unmeshed or disengaged at the opposite side. In other words, the diameter of a first circle crossing the tops of the inwards oriented gear elements of the hoop element should at least be equal to or larger than the diameter of a second circle crossing the throughs of the gear elements of the geared wheel plus half of the difference between the diameter of the second circle and the diameter of a third circle crossing the tops of the gear elements of the geared wheel.

Because the hoop element is placed as an intermediary between the geared wheel and the linear actuators, more geared elements of the geared wheel can be simultaneously intermeshed, at least partly, with gear elements of the hoop element than would be possible with a known step motor. The strain on individual gear elements can thus be greatly reduced, because the forces are spread across more gear elements. In order for the hoop element to distribute the forces across more gear elements, the hoop element thus needs to be a substantially rigid element, preferably a monolithic element.

In order to be able to rotate the geared wheel fully, at least two actuators such as a spring-return or double acting linear actuators are required which can move the hoop element both back and forth across its actuation line. Alternatively at least three single-acting actuators are required, where the movement obtained by a first single-acting linear actuator can be reversed by actuating the two opposing single-acting linear actuators simultaneously, generating a linear motion along a virtual actuation line laying between both linear actuators.

In another embodiment of a step motor according to the invention, the at least two linear actuators are double-acting actuators.

By employing double-acting actuators, a very compact and lightweight construction can be obtained.

Optionally, the double-acting linear actuator comprises a pair of single-acting linear actuators, which single-acting linear actuators are opposed or at least acting along oppositely oriented parallel actuation lines.

Also an embodiment of a step motor according to the invention, is a step motor wherein the actuation lines of two linear actuators are perpendicular to each other.

With two linear actuators operating perpendicular to each other, a compact setup can be obtained. Preferably such a motor comprises just the two linear actuators of the double-acting type.

In yet another embodiment of a step motor according to the invention, the hoop element comprises an outer wall and the motor housing comprises an inner wall, wherein for each of the actuation lines the outer wall comprises at least one sliding face parallel to the respective actuation line and at least one limiting face at an angle, preferably perpendicular to the respective actuation line and wherein the inner wall of the motor housing comprises faces corresponding with the sliding and limiting faces of the hoop element for respectively preventing rotation of the hoop element and limiting the stroke along each actuation line.

By ensuring that for each actuation line the movement of the hoop element within the actuation plane is restricted against rotation by a sliding face of the hoop element sliding along a corresponding sliding face of the housing or of another element disposed therein, it is ensured that the force applied along the actuation line on the hoop element results in a translation in the actuation plane.

A sliding face for one actuation line may thereby be a limiting face for another actuation line.

Also an embodiment of a step motor according to the invention, is a step motor wherein the number of inward oriented gear elements is larger than the number of gear elements of the geared wheel, preferably 1 larger.

The larger of the two geared elements, the hoop element, comprises the larger number of gear elements. The reduction obtained can be controlled by varying the amount of gear elements, but in order to keep as many gear elements in contact simultaneously, the difference should be kept small. A very good increase in reliability was obtained by having one surplus gear element on the hoop element. For example using 13 gear elements on the geared wheel and 14 gear elements on the hoop element.

In a preferred embodiment of a step motor according to the invention, the inward oriented gear elements have a circular profile and the gear elements of the geared wheel have a cycloidal profile.

The cycloidal gear elements intermesh with the circular profile with near zero backlash. This is highly beneficial step motor applications. Furthermore, the profile of the gear elements is rounded, preventing high forces across a thin end of a gear when partially intermeshed.

Also an embodiments of a step motor according to the invention, is a step motor wherein the linear actuators are fluid operated, preferably pneumatic linear actuators.

Fluid operated actuators are well equipped for environments where no magnetic or conducting materials are allowed. They furthermore allow very precise control.

Preferably the step motor is thereby suitable for use in a medical imaging environment, wherein the motor is constructed from materials compatible with magnetic resonance medical imaging equipment, such as nonmagnetic and dielectric materials like plastics, ceramics and rubbers.

Another embodiment of a step motor according to the invention, is a step motor further comprising an intermediary element coupled with at least one linear actuator and disposed within the motor housing and constrained to be linearly displaceable along the actuation line of said linear actuator, comprising two engagement surfaces for engagement with the hoop element for directly transmitting force to the hoop element, said two engagement surfaces being substantially opposite to each other.

By employing an intermediary element coupled with the linear actuator and constrained to linear movement along the actuation line of the linear actuator, movement of a double acting linear actuator can be easily applied from two opposite sides of the hoop element. Furthermore, because the intermediary element is constrained to linear movement, reactive torque working on the element can be transferred to the housing effectively without influencing the linear actuator directly. The engagement surfaces can thereby form at least part of a sliding face for movement perpendicular to the actuation angle of the linear actuator and may comprise a limiting surface for such movement as well.

In another preferred embodiment of a step motor according to the invention, intermediary element is a driven element, such as a piston, of a double-acting linear actuator.

A very compact step motor can be obtained when the intermediary element is a directly driven element of a double-acting linear actuator, such as a piston of fluid operated linear actuator. The respective cylinder is then split across two opposing sides of the housing, whereby the intermediary element extends across both sides.

B. Step Motors-Specific Embodiments

Specific embodiments of the step motors provided herein are described within the accompanying drawings.

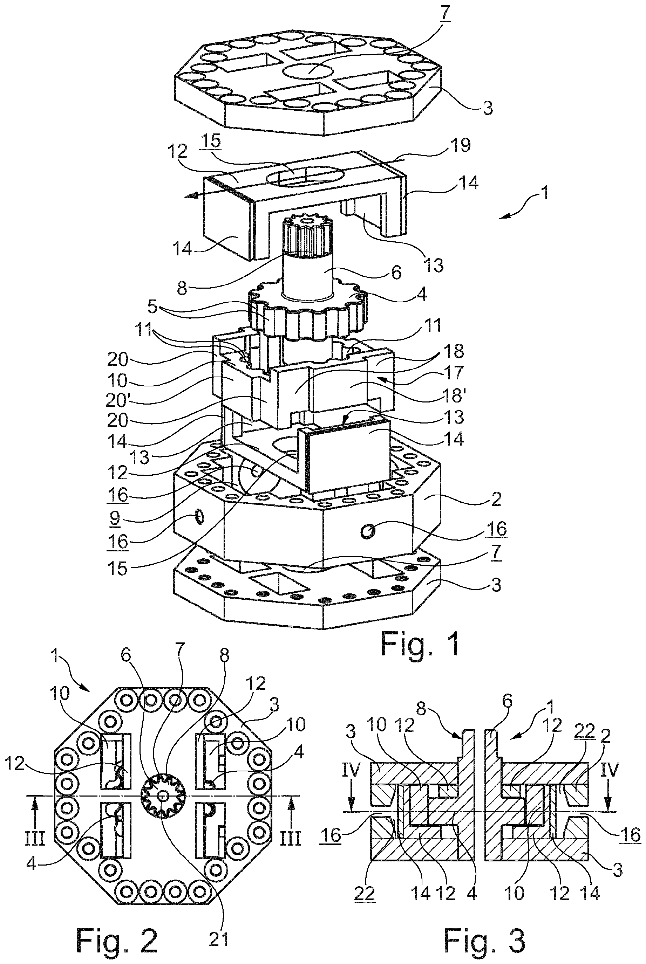

More specifically, In figure 1 an exploded view of an embodiment of a step motor 1 according to the invention is shown. The step motor 1 has a motor housing 2, 3 composed of a main body 2 and two covers 3. The geared wheel 4 comprises gear elements 5 with a cycloidal profile disposed around the circumference of the geared wheel 4. The geared wheel 4 is mounted on an axle 6, which axle 6 is constrained within the axle mounting holes 7 in the top and bottom covers 3 of the motor housing to allow rotational motion of the axle 6. A gear 8 is arranged on the end of the axle 6 for driving external parts. Within the main body 2 of the motor housing, a cavity 9 is formed in which the different elements are disposed. A hoop element 10 has inward oriented gear elements 11 with a circular profile.

Figure 1 furthermore shows the step motor 1 having two pistons 12 as part of two fluid-operated double-acting linear actuators, each of which pistons 12 is constrained to be linearly displaceable along respective actuation lines which are perpendicular to each other. Each piston 12 is U-shaped and has engagement surfaces 13 for engagement with the hoop element 10 for directly transmitting force to the hoop element 10. On the side opposite the engagement surfaces 13, seals 14 are applied for sealing of the piston 12 against the cylinder bore formed within the internal cavity 9 of the main body 2 and further closed off by the covers 3 of the motor housing 2, 3. Elongate slots 15 are provided in each piston 12, allowing the pistons 12 to move along their respective actuation lines with respect to the axle 6 extending through the slots 15. Connecting ports 16 are supplied for each cylinder around the main body 2 for injecting and evacuating the operating fluid to each cylinder.

Figure 1 furthermore shows the outer wall 17 of the hoop element 10 formed by multiple sliding faces 18 parallel to the actuation line of the top piston 12 as depicted by the arrow 19. Another part of the outer wall 17 of the hoop element 10 is formed by the limiting faces 20, which are perpendicular to the respective actuation line 19. When viewed along the actuation line of the bottom piston 12, the roles of the sliding faces 18 and limiting faces 20 are reversed. The extending faces 18' and 20' slide and respectively limit against the engagement surfaces 13 of the pistons 12.

In figure 2 a top view of the assembled step motor 1 according to figure 1 is shown, viewed in the direction of the first axis 21 around which the geared wheel 4 rotates and showing the geared end 8 of the axle 6. Slots in the cover 3 allow the hoop element 10 and the geared wheel 4 to be shown.

In figure 3 the sectional view along line III-III of the assembled step motor 1 of figure 2 is shown. In the sectional view, the arrangement of both U-shaped pistons 12 within the motor housing 2, 3 is clearly visible. The opposed cylinders 22 in which the pistons 12 are arranged each have a connecting port 16 for injecting or evacuating the operating fluid.

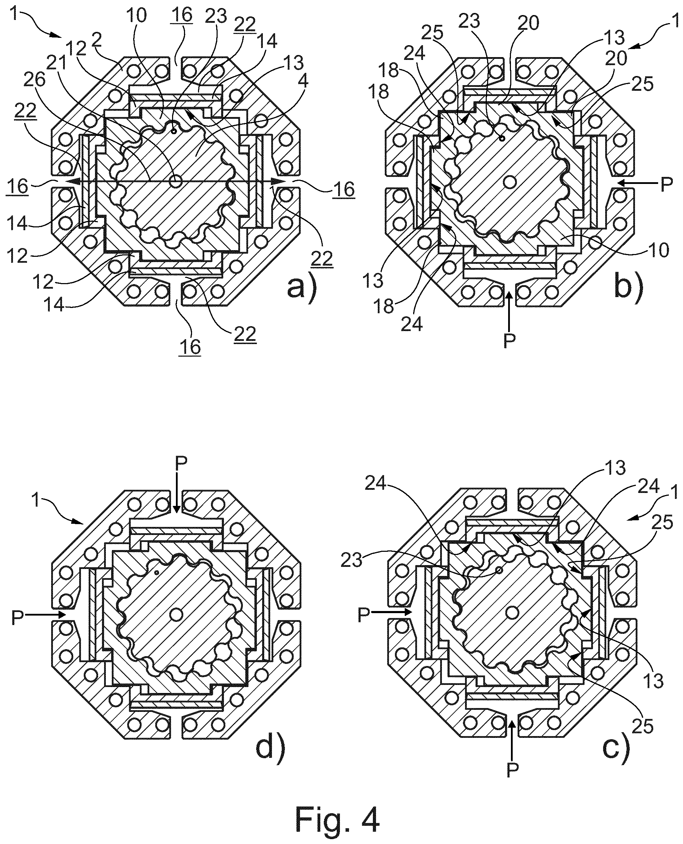

In figure 4a a sectional view along line IV-IV as shown in figure 3 of the assembled step motor 1 is shown in consecutive steps of actuation. For preventing clutter, most parts are only indicated in figure 4a, the parts being easily recognized in corresponding positions in figures 4b-d.

Starting with figure 4a, the piston 12 of the, as depicted and relative to the orientation of the drawing, vertically operating linear actuator operating along a vertical actuation line is shown in a down position. The piston 12 of the horizontally operating linear actuator operating along a horizontal actuation line is shown in a left position. The positions of the pistons 12 relative to the orientation of the drawings in figures 4a-d are not depicting or intended to depict the actual lowest, leftmost, highest or rightmost positions of the pistons 12 during their back and forth movements during the actuation sequence. This can be clearly seen by the small gap existing between the intermeshed gear elements intersecting with the actuation line 26 of the horizontally operating linear actuator. So for example when transitioning from the state in figure 4a to the state in figure 4b, the piston 12 of the horizontally operating linear actuator will go left a little more to the leftmost position and then move back slightly rightwards again. This applies analogously to the consecutive transitions. The geared wheel 4 is marked with a dot 23 to better visualize rotation of the geared wheel 4. In the bottom left portion of the hoop element 10, the geared elements can be seen to be fully disengaged, while on the opposite side the geared elements are fully intermeshed.

In figure 4b, the vertically moving piston 12 has moved upwards to an up position by pressurizing the connection ports marked P. The hoop element 10 has translated within the actuation plane, by sliding with faces 18 of the outer wall of the hoop element 10 along the corresponding abutting faces 24 and the engagement surface 13 of the horizontally oriented piston 12. Wall faces of the main body 2 can also form part of the corresponding sliding faces. The maximum stroke is achieved by the limiting faces 20 of the hoop element 10 abutting the corresponding limiting faces 13, 25 of the vertically oriented piston 12.

In figure 4c, the horizontally moving piston 12 has moved to a right position by pressurizing the connection ports marked P. The sliding faces 13, 24 of the vertically moving piston 12 and the limiting faces 13, 25 of the horizontally moving piston have been indicated for the respective movement. The dot 23 has moved further counter clockwise by the actuation.

In figure 4d, the vertically moving piston 12 has moved to a down position by pressurizing the connection ports marked P. The dot 23 has moved yet further counterclockwise by the actuation. By subsequently pressurizing the right cylinder again, the state of the pistons 12 as depicted in figure 4a is obtained again, with the geared wheel 4 rotated counterclockwise, in the depicted arrangement by an angle of 360 divided by the number of gear elements of the geared wheel 4, thus rotated counterclockwise by an angle of $\dfrac{360}{13}$ degrees.

EXAMPLES

Following are some exemplary numbered embodiments of the present disclosure.

Example 1

In a first exemplary embodiment, the step motor has a motor housing measuring $(80 \times 80 \times 36)$ mm$^3$, having a volume of 230 cm$^3$. The motor housing has two pneumatic cylinders with pistons configured in a cross shape. The cross-sectional area of the rectangular bore if the cylinders is $(30 \times 20)$ mm$^2$ = 600 mm$^2$. A single-step stroke is 2.17 mm, resulting in a single-step stroke volume of 1.30 cm3. The two pistons interact with a hoop gear; one piston moves it horizontally while the other piston moves it vertically. The sliding surfaces around the perimeter restrict rotational movements of the hoop gear. The hoop gear has 14 inner teeth which interact with the 13 teeth of the gear on the shaft. The hoop gear teeth have a circular shape while the teeth of the shaft gear have a cycloidal shape. All teeth are mathematically in contact with at least one mating tooth at all times. The

step size is $\dfrac{360}{4 \cdot 13} \approx 6.9° \approx 0.12 \text{ rad}$ rad. At a gauge pressure of 0.1 MPa (1 bar) the theoretical work per step is $W = (1 \cdot 10^5 \, \text{Pa}) \cdot (1.30 \cdot 10^{-6} \, \text{m}^3) = 0.13$ J. The nominal

torque is then $\dfrac{0.13 \, J}{0.12 \, rad} = 1.1 \, Nm$, or 10.8 N m MPa$^{-1}$.

Tests were performed with a step motor according to the first exemplary embodiment, highly similar to the embodiment of FIG. 1, which was 3-D printed in polylactic acid (PLA) on a Bambulab X1C (Bambu Lab GmbH, Shenzhen, China), with the exception of the geared shaft which was printed in polycarbonate (PC) for increased strength. The seals for sealing the pistons in the cylinders were manually cut from 1.5mm silicone rubber using a 3-D printed template. Petroleum jelly (Vaseline) was applied to the moving parts as lubricant, while Loctite 5926 (blue silicone) sealed the rigid housing parts. Nylon screws were used to hold the housing together. Polyurethane tubing with a diameter of 4mm was inserted and glued in the air ducts.

The maximum torque obtained with the first exemplary embodiment was measured to be 6.4 N m at a pressure of 0.8 MPa; almost twice that of the similarly-sized and also 3-D printed R-80 (3.7 N m) as disclosed in the publication by V. Groenhuis and S. Stramigioli, "Rapid Prototyping High-Performance MR Safe Pneumatic Stepper Motors," in IEEE/ASME Transactions on Mechatronics, vol. 23, no. 4, pp. 1843-1853, Aug. 2018, doi: 10.1109/TMECH.2018.2840682. Furthermore, the R-80 motor broke down at 0.5 MPa while the motor according to the first exemplary embodiment continued operating at all tested pressures.

Example 2

In a second exemplary embodiment, stepper motor is a scaled-down version of the first exemplary embodiment. In addition to smaller dimensions, it also features a pinion on the output shaft, adjacent to the cycloid gear, which can engage with a straight or curved rack passing through the housing. This way the second exemplary embodiment of a stepper motor can directly actuate a prismatic or revolute joint in relatively small steps. The housing of the stepper motor is glued together which makes it non-serviceable, as opposed to the first exemplary embodiment which uses nylon screws. It measures $(45 \times 40 \times 15)$ mm$^3$ = 27.0 cm$^3$. It uses the same operating principle as the first exemplary embodiment.

The pneumatic cylinders have a cross-sectional area of $(12 \times 10)$ mm$^2$ = 120 mm$^2$. The stroke of a single step is 1.09 mm, so the stroke volume is 130 mm$^3$. The hoop gear has 14 teeth and the rotor's cycloidal gear has 13 teeth, resulting in a step size of is $6.9° \approx 0.12$ rad. At a gauge pressure of 0.1 MPa (1 bar) the theoretical work per step is W = $(1 \cdot 10^5$ Pa$) \cdot (130 \cdot 10^{-9}$ m$^3$) = 0.013 J. The nominal torque is then

$$\frac{0.013\ J}{0.12\ rad} = 0.108\ N\ m$$

, or 1.08 N m MPa$^{-1}$.

Tests were performed with a step motor according to the second exemplary embodiment, 3-D printed according to the first exemplary embodiment.
The maximum torque obtained with the second exemplary embodiment was measured to be 0.47 N m at a pressure of 0.8 MPa.

The invention has been described broadly and generically herein. Each of the narrower species and subgeneric groupings falling within the generic disclosure also form part of the invention. This includes the generic description of the invention with a proviso or negative limitation removing any subject matter from the genus, regardless of whether or not the excised material is specifically recited herein.

It is also to be understood that as used herein and in the appended claims, the singular forms "a," "an," and "the" include plural reference unless the context clearly dictates otherwise, the term "X and/or Y" means "X" or "Y" or both "X" and "Y," and the letter "s" following a noun designates both the plural and singular forms of that noun. In addition, where features or aspects of the invention are described in terms of Markush groups, it is intended, and those skilled in the art will recognize, that the invention embraces and is also thereby described in terms of any individual member and any subgroup of members of the Markush group, and Applicants reserve the right to revise the application or claims to refer specifically to any individual member or any subgroup of members of the Markush group.

It is to be understood that the terminology used herein is for the purpose of describing specific embodiments only and is not intended to be limiting. It is further to be understood that unless specifically defined herein, the terminology used herein is to be given its traditional meaning as known in the relevant art.

Reference throughout this specification to "one embodiment" or "an embodiment" and variations thereof means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

As used in this specification and the appended claims, the singular forms "a," "an," and "the" include plural referents, i.e., one or more, unless the content and context clearly dictates otherwise. It should also be noted that the conjunctive terms, "and" and "or" are generally employed in the broadest sense to include "and/or" unless the content and context clearly dictates inclusivity or exclusivity as the case may be. Thus, the use of the alternative (e.g., "or") should be understood to mean either one, both, or any combination thereof of the alternatives. In addition, the composition of "and" and "or" when recited herein as "and/or" is intended to encompass an embodiment that includes all of the associated items or ideas and one or more other alternative embodiments that include fewer than all of the associated items or ideas.

Unless the context requires otherwise, throughout the specification and claims that follow, the word "comprise" and synonyms and variants thereof such as "have" and "include," as well as variations thereof such as "comprises" and "comprising" are to be construed in an open, inclusive sense, e.g., "including, but not limited to." The term "consisting essentially of" limits the scope of a claim to the specified materials or steps, or to those that do not materially affect the basic and novel characteristics of the claimed invention.

Any headings used within this document are only being utilized to expedite its review by the reader and should not be construed as limiting the invention or claims in any manner. Thus, the headings and Abstract of the Disclosure provided herein are for convenience only and do not interpret the scope or meaning of the embodiments.

Where a range of values is provided herein, it is understood that each intervening value, to the tenth of the unit of the lower limit unless the context clearly dictates otherwise, between the upper and lower limit of that range and any other stated or intervening value in that stated range is encompassed within the invention. The upper and lower limits of these smaller ranges may independently be included in the smaller ranges is also encompassed within the invention, subject to any specifically excluded limit in the stated range. Where the stated range includes one or both of the limits, ranges excluding either or both of those included limits are also included in the invention.

For example, any concentration range, percentage range, ratio range, or integer range provided herein is to be understood to include the value of any integer within the recited range and, when appropriate, fractions thereof (such as one tenth and one hundredth of an integer), unless otherwise indicated. Also, any number range recited herein relating to any physical feature, such as polymer subunits, size or thickness, are to be understood to include any integer within the recited range, unless otherwise indicated. As used herein, the term "about" means $\pm$ 20% of the indicated range, value, or structure, unless otherwise indicated.

All of the U.S. patents, U.S. patent application publications, U.S. patent applications, foreign patents, foreign patent applications and non-patent publications referred to in this specification and/or listed in the Application Data Sheet, are incorporated herein by reference, in their entirety. Such documents may be incorporated by reference for the purpose of describing and disclosing, for example, materials and methodologies described in the publications, which might be used in connection with the presently described invention. The publications discussed above and throughout the text are provided solely for their disclosure prior to the filing date of the present application. Nothing herein is to be construed as an admission that the inventors are not entitled to antedate any referenced publication by virtue of prior invention.

All patents, publications, scientific articles, web sites, and other documents and materials referenced or mentioned herein are indicative of the levels of skill of those skilled in the art to which the invention pertains, and each such referenced document and material is hereby incorporated by reference to the same extent as if it had been incorporated by reference in its entirety individually or set forth herein in its entirety. Applicants reserve the right to physically incorporate into this specification any and all materials and information from any such patents, publications, scientific articles, web sites, electronically available information, and other referenced materials or documents.

In general, in the following claims, the terms used should not be construed to limit the claims to the specific embodiments disclosed in the specification and the claims, but should be construed to include all possible embodiments along with the full scope of equivalents to which such claims are entitled. Accordingly, the claims are not limited by the disclosure.

Furthermore, the written description portion of this patent includes all claims. Furthermore, all claims, including all original claims as well as all claims from any and all priority documents, are hereby incorporated by reference in their entirety into the written description portion of the specification, and Applicants reserve the right to physically incorporate into the written description or any other portion of the application, any and all such claims. Thus, for example, under no circumstances may the patent be interpreted as allegedly not providing a written description for a claim on the assertion that the precise wording of the claim is not set forth in *haec verba* in written description portion of the patent.

The claims will be interpreted according to law. However, and notwithstanding the alleged or perceived ease or difficulty of interpreting any claim or portion thereof, under no circumstances may any adjustment or amendment of a claim or any portion thereof during prosecution of the application or applications leading to this patent be interpreted as having forfeited any right to any and all equivalents thereof that do not form a part of the prior art.

Other nonlimiting embodiments are within the following claims. The patent may not be interpreted to be limited to the specific examples or nonlimiting embodiments or methods specifically and/or expressly disclosed herein. Under no circumstances may the patent be interpreted to be limited by any statement made by any Examiner or any other official or employee of the Patent and Trademark Office unless such statement is specifically and without qualification or reservation expressly adopted in a responsive writing by Applicants.

**Claims**

1. A step motor comprising:

   - a motor housing;
   - a geared wheel comprising gear elements disposed around the circumference, the geared wheel being disposed in the motor housing and rotatable around a first axis;
   - a hoop element comprising inward oriented gear elements, said hoop element being disposed within the motor housing and around the geared wheel and being displaceable in an actuation plane perpendicular to the first axis and wherein the inward oriented gear elements are arranged for cooperating with gear elements of the geared wheel by intermeshing, and
- at least two linear actuators evenly spaced around the first axis and configured for displacing the hoop element in the actuation plane for rotating the geared wheel, each linear actuator providing linear motion along a respective actuation line.

2. Step motor according to claim 1, wherein the at least two linear actuators are double-acting actuators.

3. Step motor according to claim 2, wherein a double-acting linear actuator comprises a pair of single-acting linear actuators, which single-acting linear actuators are opposed or at least acting along oppositely oriented parallel actuation lines.

4. Step motor according to any one of the foregoing claims, wherein the actuation lines of two linear actuators are perpendicular to each other.

5. Step motor according to any one of the foregoing claims, wherein the hoop element comprises an outer wall and wherein the motor housing comprises an inner wall, wherein for each of the actuation lines the outer wall comprises at least one sliding face parallel to the respective actuation line and at least one limiting face at an angle, preferably perpendicular to the respective actuation line and wherein the inner wall of the motor housing comprises faces corresponding with the sliding and limiting faces of the hoop element for respectively preventing rotation of the hoop element and limiting the stroke along each actuation line.

6. Step motor according to any one of the foregoing claims, wherein the number of inward oriented gear elements is larger than the number of gear elements of the geared wheel, preferably 1 larger.

7. Step motor according to any one of the foregoing claims, wherein the inward oriented gear elements have a circular profile and the gear elements of the geared wheel have a cycloidal profile.

8. Step motor according to any one of the foregoing claims, wherein the linear actuators are fluid operated, preferably pneumatic linear actuators.

9. Step motor according to claim 8 for use in a medical imaging environment, wherein the motor is constructed from materials compatible with magnetic resonance medical imaging equipment, such as nonmagnetic and dielectric materials like plastics, ceramics and rubbers.

10. Step motor according to any one of the foregoing claims, further comprising an intermediary element coupled with at least one linear actuator and disposed within the motor housing and constrained to be linearly displaceable along the actuation line of said linear actuator, comprising two engagement surfaces for engagement with the hoop element for directly transmitting force to the hoop element, said two engagement surfaces being substantially opposite to each other.

11. Step motor according to claim 10, wherein the intermediary element is a driven element, such as a piston, of a double-acting linear actuator.

Fig. 1

Fig. 2

Fig. 3

Fig. 4

Europäisches
Patentamt

European
Patent Office

Office européen
des brevets

## EUROPEAN SEARCH REPORT

**Application Number**

EP 24 15 5458

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | US 6 069 420 A (MIZZI JOHN V [US] ET AL)<br>30 May 2000 (2000-05-30)<br>* figures 7a, 7b *<br>* column 7, line 40 - column 8, line 36 *<br>* the whole document * | 1,2,4,<br>6-9<br>3,10,11<br>5 | INV.<br>F16H25/02<br>F15B15/06<br>F16H25/14<br>F16H27/02<br>F16H31/00 |
| X<br>A | US 3 133 448 A (DAVIS KENNETH J ET AL)<br>19 May 1964 (1964-05-19)<br>* figure 2 *<br>* column 3, line 40 - column 4, line 22 *<br>* the whole document * | 1,2,4,<br>7-11<br>3,5,6 | |
| X<br>A | US 1 446 267 A (NEWCOMB RALPH W)<br>20 February 1923 (1923-02-20)<br>* figures 1, 3, 4 *<br>* the whole document * | 1,2,9-11<br>3-8 | |
| Y,D | US 2020/182267 A1 (GROENHUIS VINCENT [NL]<br>ET AL) 11 June 2020 (2020-06-11)<br>* figures 3a, 3b, 3c, 3d *<br>* the whole document * | 3,10,11 | |
| | | | **TECHNICAL FIELDS SEARCHED (IPC)**<br><br>F16H<br>F15D<br>F15B |

The present search report has been drawn up for all claims

| Place of search | Date of completion of the search | Examiner |
|---|---|---|
| Munich | 4 July 2024 | Ehrsam, Adrian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 15 5458

This annex lists the patent family members relating to the patent documents cited in  the above-mentioned European search report.
The members are as contained in the European Patent Office EDP file on
The European Patent Office is in no way liable for these particulars which are merely given for the purpose of information.

04-07-2024

| Patent document cited in search report | | Publication date | Patent family member(s) | | Publication date |
|---|---|---|---|---|---|
| US 6069420 | A | 30-05-2000 | AU | 3756299 A | 08-11-1999 |
| | | | CA | 2328887 A1 | 28-10-1999 |
| | | | US | 6069420 A | 30-05-2000 |
| | | | WO | 9954988 A1 | 28-10-1999 |
| US 3133448 | A | 19-05-1964 | NONE | | |
| US 1446267 | A | 20-02-1923 | NONE | | |
| US 2020182267 | A1 | 11-06-2020 | EP | 3504445 A1 | 03-07-2019 |
| | | | ES | 2935011 T3 | 01-03-2023 |
| | | | FI | 3504445 T3 | 13-01-2023 |
| | | | HU | E060639 T2 | 28-04-2023 |
| | | | PL | 3504445 T3 | 06-02-2023 |
| | | | PT | 3504445 T | 12-01-2023 |
| | | | US | 2020182267 A1 | 11-06-2020 |
| | | | US | 2024151249 A1 | 09-05-2024 |
| | | | WO | 2018038608 A1 | 01-03-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020182267 A

**Non-patent literature cited in the description**

- **V. GROENHUIS** ; **S. STRAMIGIOLI**. Rapid Prototyping High-Performance MR Safe Pneumatic Stepper Motors. *IEEE/ASME Transactions on Mechatronics*, August 2018, vol. 23 (4), 1843-1853